# EUROPEAN PATENT APPLICATION

(11) **EP 4 700 971 A1**
(43) Date of publication of application: **25.02.2026**
(21) Application number: 24894466.2
(22) Date of filing: 06.11.2024
(51) Int. Cl.: H01M 50/536, H01M 50/533, H01M 10/6556, H01M 10/613, H01M 10/6567, H01M 10/0585

(54) **METHOD FOR MANUFACTURING ELECTRODE ASSEMBLY, BATTERY CELL MANUFACTURED USING SAME, AND SYSTEM FOR MANUFACTURING ELECTRODE ASSEMBLY**

(30) Priority: 24.11.2023 KR 20230166049
(71) Applicant: LG Energy Solution, Ltd., Seoul 07335 (KR)
(72) Inventor: HONG, Sukhyun, Daejeon 34122 (KR); SONG, Jieun, Daejeon 34122 (KR)
(74) Representative: Goddar, Heinz J.
(86) International application number: PCT/KR2024/017431
(87) International publication number: WO 2025/110573

(57) **Abstract**

Provided is a method for manufacturing electrode assembly, the method comprising: a preparation step of aligning electrode tabs of one or more first electrode plates; a cooling step of cooling the electrode tabs; and a connecting step of coupling the cooled electrode tabs and lead tabs to each other.

## Description

### Technical Field

The present disclosure relates to an electrode assembly manufacturing method, a battery cell manufactured using the same, and an electrode assembly manufacturing system.

### Background Art

Secondary batteries may be charged and discharged unlike primary batteries and thus may be applied to various fields such as digital cameras, mobile phones, laptops, hybrid cars, and electric vehicles. The secondary batteries include a nickel-cadmium battery, a nickel-metal hydride battery, a nickel-hydrogen battery, and the like, and recently, a lithium ion battery has been widely utilized.

For a negative electrode or a positive electrode in existing lithium ion batteries, the negative electrode or the positive electrode is fabricated by using copper, aluminum foil, or the like as a metal current collector and laminating a negative electrode active material or a positive electrode active material on both sides thereof.

In contrast, in the next-generation batteries, i.e., a lithium-sulfur battery (Li-S battery) or a lithium-metal battery (Li-Metal battery), a negative electrode may be composed of lithium metal alone. In this case, lithium metal constituting a negative electrode plate has lower mechanical strength than a metal current collector of an existing negative electrode and thus may have an issue of being easily deformed or sticking in a process of manufacturing the negative electrode. In particular, an electrode tab of the negative electrode composed of lithium metal has problems of not having sufficient coupling strength as being pressed and spread by pressure in a welding process to a lead tab or undergoing interference with other components of a battery cell and of easily sticking to a welding machine.

Accordingly, a manufacturing method is required to increase the ease of coupling and coupling strength between an electrode tab of a negative electrode composed of lithium metal and a lead tab.

### Detailed Description of the Invention

### Technical Goals

The present disclosure is conceived to solve at least some of the problems in the related art as described above and provides an electrode assembly manufacturing method and an electrode assembly manufacturing system in which excellent coupling quality and ease of coupling between an electrode tab and a lead tab may be implemented.

In addition, the present disclosure is intended to provide an electrode assembly manufacturing method and an electrode assembly manufacturing system in which lithium sticking may be prevented in a process of coupling an electrode tab and a lead tab.

In addition, the present disclosure is intended to provide an electrode assembly manufacturing method and an electrode assembly manufacturing system in which a manufacturing process may be performed while an electrode tab is cooled and hardened and thus increases in mechanical stiffness.

### Technical solutions

To achieve the above goals, according to example embodiments of the present disclosure, provided is an electrode assembly manufacturing method including a preparing step, in which an electrode tab of one or more first electrode plates is aligned, a cooling step, in which the electrode tab is cooled, and a connecting step, in which the cooled electrode tab and a lead tab are coupled to each other.

According to an example embodiment, in the electrode assembly manufacturing method, the electrode tab of the one or more first electrode plates may be composed of lithium or an alloy including lithium.

According to an example embodiment, in the cooling, the electrode tab may be cooled in a state pressed by a cooling apparatus.

According to an example embodiment, in the electrode assembly manufacturing method, the cooling apparatus may include a first press part and a second press part configured to perform a relative movement in a direction closer to each other and press the electrode tab, and at least one of the first press part and the second press part may include a cooling flow path through which a coolant flows.

According to an example embodiment, in the electrode assembly manufacturing method, the coolant flowing through the cooling flow path may be liquid nitrogen.

According to an example embodiment, in the preparing step, the one or more first electrode plates may be stacked alternately with one or more second electrode plates with a separator in between, and the one or more second electrode plates may have opposite polarity to the one or more first electrode plates.

According to an example embodiment, in the preparing step, an electrode tab bundle in which the electrode tab of the one or more first electrode plates is stacked may be formed, and in the cooling step, the electrode tab bundle may be cooled.

According to an example embodiment, in the electrode assembly manufacturing method, the one or more first electrode plates may be made of lithium or an alloy including lithium.

According to an example embodiment, the connecting may include a first connecting step, in which the cooled electrode tab and the lead tab are aligned on a connecting apparatus and a second connecting step, in which the electrode tab and the lead tab are coupled by the connecting apparatus.

According to an example embodiment, in the first connecting step, a temperature of the electrode tab may be less than or equal to 0 degrees Celsius (°C).

According to an example embodiment, in the second connecting step, the electrode tab and the lead tab may be coupled through ultrasonic welding.

According to example embodiments of the present disclosure, provided is a battery cell including an electrode assembly manufactured by the electrode assembly manufacturing method and a case surrounding the electrode assembly.

According to example embodiments of the present disclosure, provided is an electrode assembly manufacturing system including a stacking apparatus configured to align one or more first electrode plates and one or more second electrode plates having opposite polarity to each other, a cooling apparatus configured to cool an electrode tab of the one or more first electrode plates, and a connecting apparatus configured to connect the cooled electrode tab and a lead tab.

According to an example embodiment, the cooling apparatus may include a first press part and a second press part configured to perform a relative movement in a direction closer to each other and press the electrode tab, and at least one of the first press part and the second press part may include a cooling flow path through which a coolant flows.

According to an example embodiment, the connecting apparatus may be configured to ultrasonically weld the cooled electrode tab and the lead tab.

### Effects of the Invention

According to the example embodiments, it is possible to implement an electrode assembly manufacturing method and an electrode assembly manufacturing system in which excellent coupling quality and ease of coupling between an electrode tab and a lead tab may be implemented.

In addition, according to the example embodiments, it is possible to provide an electrode assembly manufacturing method and an electrode assembly manufacturing system in which lithium sticking may be prevented in a process of coupling an electrode tab and a lead tab.

Further, it is possible to provide an electrode assembly manufacturing method and an electrode assembly manufacturing system in which a manufacturing process may be performed while an electrode tab is cooled and hardened through a cooling process and thus increases in mechanical stiffness.

### Brief Description of Drawings

FIG. 1 is an exploded perspective view of a battery cell.
FIG. 2 illustrates an example configuration of an electrode assembly.
FIG. 3 is a flowchart illustrating an electrode assembly manufacturing method according to example embodiments.
FIG. 4 illustrates an example configuration of an electrode assembly manufacturing system according to example embodiments.
FIG. 5 illustrates an example configuration of a cooling apparatus.
FIG. 6 is an example reference diagram illustrating at least a portion of an electrode tab being cooled by a cooling apparatus.
FIG. 7 illustrates an example configuration of a connecting apparatus.

### Mode for Carrying Out the Invention

Before describing the present disclosure in detail, the words and terminologies used in the specification and claims are not to be construed as limited to common or dictionary meanings but construed as meanings and concepts coinciding with the technical idea of the present disclosure under the principle that the inventor(s) may appropriately define the concept of the terms to explain his or her own invention in the best manner. Therefore, the example embodiments described in the specification and the configurations illustrated in the drawings are no more than the most preferred example embodiments of the present disclosure and do not fully cover the technical idea of the present disclosure. Accordingly, it should be understood that there may be various equivalents and modification examples that may replace those when this application is filed.

Like reference numerals or signs in each drawing attached to the specification may refer to components or elements performing substantially like functions. For convenience of description and understanding, the same reference numeral or sign may be used for description in different example embodiments. In other words, even though elements with the same reference numeral are illustrated in a plurality of drawings, all of the plurality of drawings may not represent a single example embodiment.

In the following description, a singular expression includes a plural expression unless apparently otherwise defined by context. It should be understood that terms such as "comprise or include" and "composed of" are intended to indicate the presence of a feature, a number, a step, an operation, an element, a component, or a combination thereof which are described in the specification and not intended to previously exclude the possibility of the presence or addition of one or more other features, numbers, steps, operations, elements, components, or combinations thereof.

In addition, expressions such as upper side, upper portion, above, lower side, lower portion, below, side surface, front surface, and rear surface hereinafter are represented with respect to a direction illustrated in a drawing and may be represented otherwise when the direction of a corresponding object changes.

Further, terms including ordinal numbers such as "first" and "second" may be used to differentiate between elements in the specification and claims. These ordinal numbers may be used to differentiate identical or similar elements from each other, and the use of the ordinal numbers may not limit the meanings of terms. As an example, an element combined with an ordinal number is not to be construed as the using order or arrangement sequence thereof is limited by the ordinal number. In some cases, each ordinal number may also be used by replacing each other.

Hereinafter, example embodiments of the present disclosure are described with reference to the accompanying drawings. However, the present disclosure is not limited to the example embodiments described. For example, a person of ordinary skill in the art understanding the idea of the present disclosure may suggest other example embodiments included within the scope of the idea of the present disclosure through the addition, change, or deletion of an element, which, however, are also included within the scope of the present disclosure. The shapes and sizes of elements in drawings may be exaggerated for clearer description.

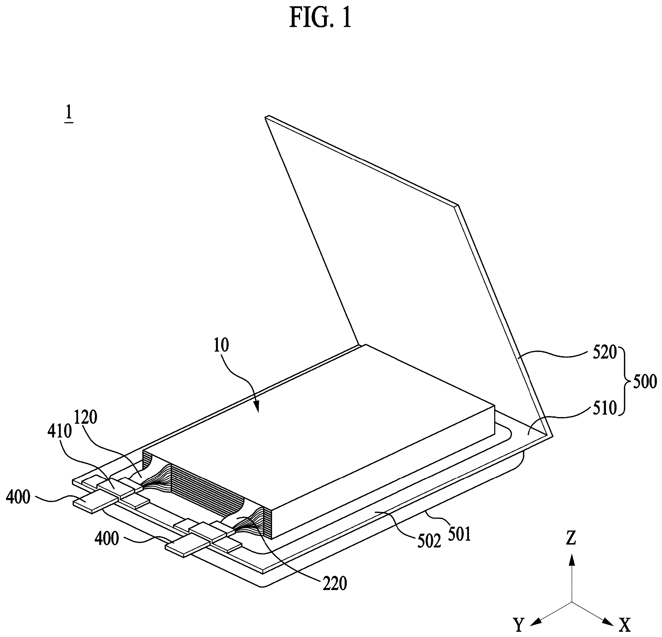

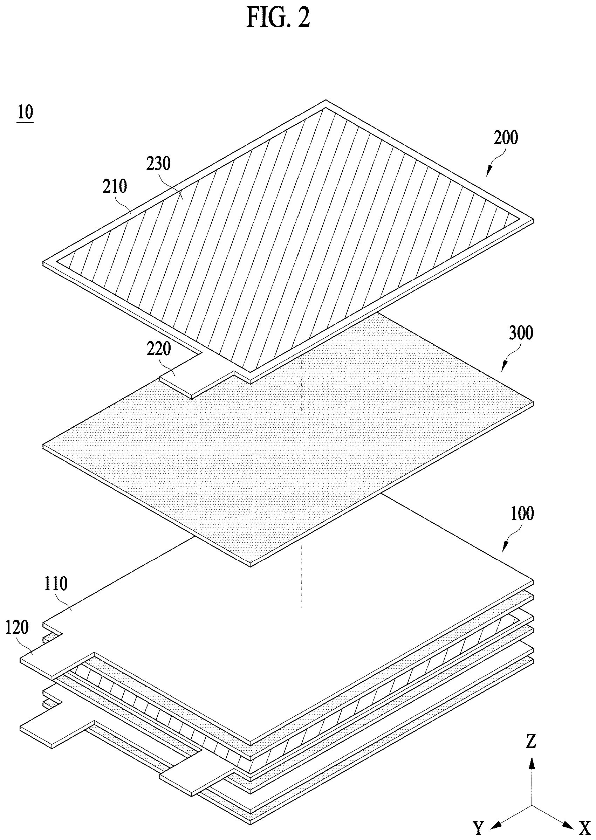

First, with reference to FIGS. 1 and 2, a configuration of a battery cell 1 according to example embodiments is described.

FIG. 1 is an exploded perspective view of the battery cell 1.

FIG. 2 illustrates an example configuration of an electrode assembly 10.

Referring to FIG. 1, the battery cell 1 according to example embodiments may include the electrode assembly 10 in which a plurality of electrode plates are stacked, a case 500 in which the electrode assembly 10 is accommodated, and a lead tab 400 that is electrically connected to the electrode assembly 10 and of which a portion is exposed outside the case 500.

The case 500 may include an electrode accommodation part 501 in which the electrode assembly 10 is accommodated and a sealing part 502 disposed along an edge of the electrode accommodation part 501. The electrode accommodation part 501 may be formed as an upper case 520 and a lower case 510 combined vertically and may have an internal space where the electrode assembly 10 is accommodated. The sealing part 502 may be formed as edges of the upper case 520 and the lower case 510 are pressed or heat-fused along the edge of the electrode accommodation part 501 and may block an entry of external foreign substances or moisture of the case 500 into the electrode assembly 10 accommodated within the electrode accommodation part 501.

The case 500 may be a pouch-type case manufactured from a soft material. For example, the case 500 may be composed of an aluminum laminate sheet. However, in addition to the pouch-type case described above, the case 500 of the battery cell 1 according to example embodiments may also be composed of a can-shaped (or rectangular) case or a cylindrical case composed of a metal material such as aluminum.

Referring to FIG. 2, the electrode assembly 10 may have a structure in which a plurality of first electrode plates 100 and a plurality of second electrode plates 200 having opposite polarity to each other are stacked with a separator 300 in between. However, those illustrated in FIG. 2 are merely some of the first electrode plates 100, the second electrode plates 200, and the separator 300 included in the electrode assembly 10, and the electrode assembly 10 may have the first electrode plates 100, the second electrode plates 200, and the separator 300 with more quantities in practice than those illustrated in FIG. 2.

The separator 300 may be interposed between the first electrode plate 100 and the second electrode plate 200 and configured to prevent a short circuit between the first electrode plate 100 and the second electrode plate 200 and to be impregnated with an electrolyte so that ions may pass through. The separator 300 may be composed of a porous polymer film or a porous nonwoven fabric. However, in addition to the above materials, any material generally used in a lithium secondary battery may be used as a material of the separator 300 without particular limitation.

The first electrode plate 100 and the second electrode plate 200 may be provided with electrode tabs 120, 220, respectively. In the following description, the electrode tab of the first electrode plate 100 is defined as the first electrode tab 120, and the electrode tab of the second electrode plate 200 is defined as the second electrode tab 220.

In the electrode assembly 10, a plurality of first electrode tabs 120 and a plurality of second electrode tabs 220 may be provided. A plurality of electrode tabs 120, 220 with identical polarity may gather together and form an electrode tab bundle. The lead tab 400 which serves as a terminal in the battery cell 1 may be coupled to the electrode tab bundle, and accordingly, the electrode assembly 10 and the lead tab 400 may be electrically connected to each other. Various welding manners including ultrasonic welding or a physical fastening manner using a rivet or the like may be applied to the coupling between the electrode tab bundle and the lead tab 400.

The lead tab 400 may be composed of a conductive metal material. For example, the lead tab 400 may be composed of nickel (Ni), copper (Cu), nickel-plated copper, aluminum (Al), and the like. An insulating member 410 may be disposed between the lead tab 400 and the case 500. For example, the insulating member 410 may be composed of a material having both an insulating property and an adhesive property and may be bonded to the sealing part 502 of the case 500 while surrounding a portion of the lead tab 400 so that electrical insulation between the lead tab 400 and the case 500 is ensured and sealing performance between the lead tab 400 and the sealing part 502 is not degraded.

Meanwhile, a specific structure of the electrode assembly 10 and the lead tab 400 according to example embodiments is not limited to FIGS. 1 and 2.

For example, unlike FIG. 2, the electrode assembly 10 may also have a form in which the first electrode plate 100 is disposed at one side of a single sheet of separator 300 bent in a zigzag manner and the second electrode plate 200 is disposed at another side of the separator 300.

Alternatively, unlike FIG. 2, the electrode assembly 10 may also have a roll-type structure in which the first electrode plate 100 and the second electrode plate, each of which is provided in a single sheet, are rolled with the separator 300 interposed therebetween.

In example embodiments, the first electrode plate 100 and the second electrode plate 200 of the electrode assembly 10 may be electrode plates having opposite polarity to each other, and for example, when the first electrode plate 100 is a negative electrode plate, the second electrode plate 200 may be a positive electrode plate.

The positive electrode plate 200 may have a structure in which a positive electrode active material layer 230 is formed on a current collector 210. For example, the active material layer 230 on the positive electrode plate 200 may be formed as a mixture of a positive electrode active material, a conductive material, and a binder is applied to the current collector 210 of aluminum alloy material. In this case, any known materials used in the positive electrode plate 200 of a lithium secondary battery may be applied to materials of the positive electrode active material, the binder, the conductive material, and the current collector.

The negative electrode plate 100 of the battery cell 1 according to example embodiments, unlike an existing negative electrode plate, may also be composed of a lithium metal sheet.

In an existing case, a negative electrode plate may have a structure in which a negative electrode active material layer is formed on a current collector. For example, the negative electrode plate may be formed as a mixture of a negative electrode active material, a conductive material, and a binder is applied to a current collector of copper alloy material.

In contrast, the negative electrode plate 100 of the battery cell 1 according to example embodiments may have an integrated structure composed of a negative electrode body part 110 composed of a lithium metal sheet and the negative electrode tab 120 disposed at one side of the negative electrode body part 110. The lithium metal sheet is a flat sheet member composed of lithium or lithium alloy material, and the negative electrode body part 110 and the negative electrode tab 120 according to example embodiments may be implemented by appropriately processing a shape of the lithium metal sheet.

The battery cell 1 to which the negative electrode plate 100 composed of the lithium metal sheet is applied may omit an existing negative electrode current collector composed of nickel (Ni), aluminum (Al), copper (Cu), and the like, and thus, may be not only advantageous for a weight reduction of the battery cell 1 but also have very high energy density.

However, the negative electrode plate 100 and the negative electrode tab 120 disposed at one side of the negative electrode plate 100, when being composed of lithium metal alone without a metal current collector, may be easily crumpled or broken due to low mechanical strength of lithium in a manufacturing process of the electrode assembly 10, and a sticking issue of lithium to a manufacturing apparatus may frequently occur, which may lead to an issue of inefficiency in the manufacturing process.

In particular, when the electrode tab 120 of the negative electrode plate 100 is composed of lithium metal, the electrode tab 120 may short-circuit with other components (for example, the electrode tab 220 of the positive electrode plate 200 or the case 500) of the battery cell 1 as being pressed and spread in an ultrasonic welding process for coupling the electrode tab 120 and the lead tab 400, or a sticking issue of lithium metal of the electrode tab 120 to a welding apparatus may arise.

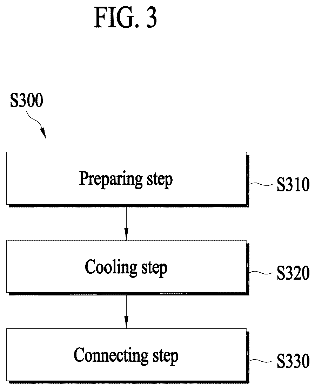

To resolve these issues, the negative electrode plate 100 according to example embodiments may be put into a connection process to the lead tab 400 while the electrode tab 120 is cooled and hardened through an electrode assembly manufacturing system 600 or an electrode assembly manufacturing method S300 to be described through FIGS. 3 to 7. As the electrode tab 120 of the negative electrode plate 100 is cooled and hardened, the mechanical strength of the electrode tab 120 may greatly increase, which may prevent lithium sticking and improve welding quality.

Hereinafter, the electrode assembly manufacturing method S300 is described with reference to FIG. 3.

FIG. 3 is a flowchart illustrating an electrode assembly manufacturing method according to example embodiments.

Since an electrode assembly and a battery cell to be described in FIG. 3 includes all features of the electrode assembly 10 and the battery cell 1 described above in FIGS. 1 and 2, a description overlapping with FIGS. 1 and 2 may be omitted.

The manufacturing method of the electrode assembly 10 of FIGS. 1 and 2 may include a preparing step S310, in which the electrode tabs (referring to 120, 220 of FIGS. 1 and 2) of the electrode plates (referring to 100, 200 of FIG. 2) are aligned, a cooling step S320, in which at least some of the aligned electrode tabs 120, 220 are cooled, and a connecting step S330, in which the cooled electrode tab and the lead tab 400 of FIG. 1 are coupled to each other.

In the preparing step S310, one or more first electrode plates 100 of FIG. 2 and one or more second electrode plates 200 of FIG. 2 may be disposed as alternately stacked with the separator 300 of FIG. 2 in between. For example, in the preparing step S310, as illustrated in FIG. 2, the plurality of first electrode plates 100 and the plurality of second electrode plates 200 may be alternately stacked in one direction with the separator 300 in between. In this case, the first electrode tabs 120 of the first electrode plates 100 may be aligned at a preset position and form a first electrode tab bundle, and the second electrode tabs 220 of the second electrode plates 200 may be aligned at a position spaced apart from the first electrode tab bundle and form a second electrode tab bundle.

In the cooling step S320, at least one of the first electrode tab bundle or the second electrode tab bundle aligned may be cooled using a cooling apparatus.

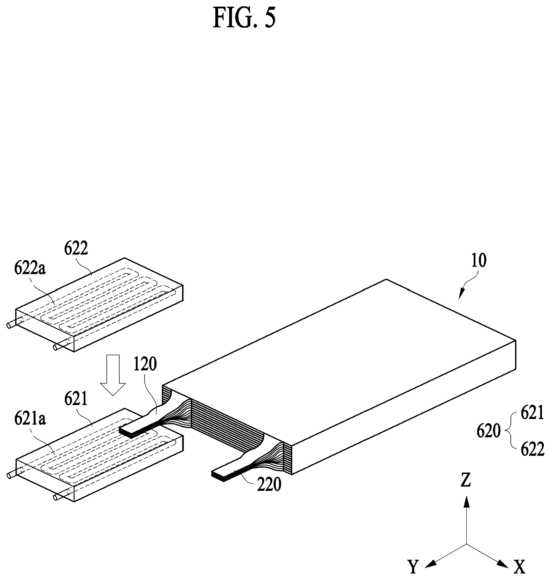

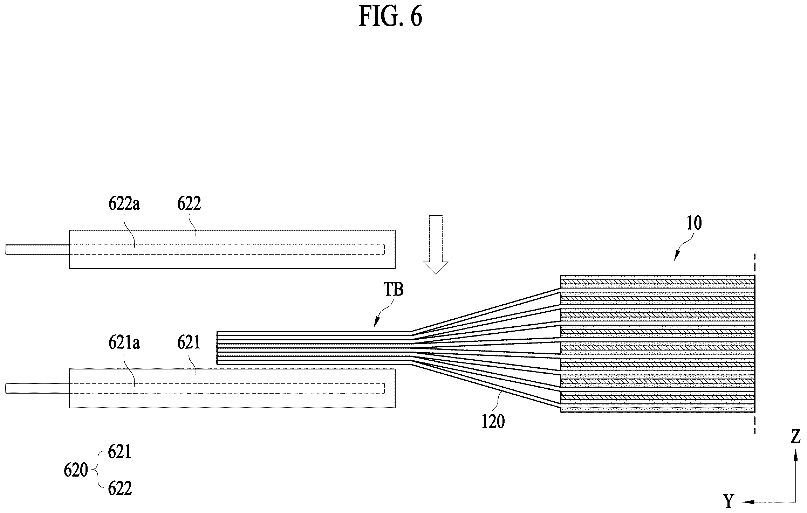

The cooling apparatus for performing the cooling step S320 may be configured to cool locally an electrode tab bundle only in the electrode assembly 10. For example, the cooling apparatus may be a cooling apparatus 620 (a detailed description thereof may refer to descriptions of FIGS. 5 and 6) with a contact cooling manner to be described in FIGS. 5 and 6. Alternatively, the cooling apparatus may have a structure of a container in which a coolant in liquid or gas form is accommodated and of which one side is open, and in this case, a cooling action may occur as the electrode tab bundle of the electrode assembly 10 is immersed in the coolant accommodated in the container for a predetermined time. However, a specific configuration of the cooling apparatus is not limited to the above description, and any configuration that may cool locally the electrode tab bundle of the electrode assembly 10 may be applied without limitation.

In the cooling step S320, a target cooling temperature of the electrode tab bundle may be lower than room temperature (about 25 degrees Celsius (°C)). For example, the target cooling temperature of the electrode tab bundle may be less than or equal to 0°C, and preferably, may be about -10°C. However, the target cooling temperature of the electrode tab bundle is not limited to the above description and may appropriately increase or decrease depending on various variables such as the size of an electrode tab, the thickness of an electrode tab bundle, a configuration of a connecting apparatus coupling the lead tab 400 and the electrode tab.

As the electrode tab bundle undergoes cooling treatment in the cooling step S320, an electrode tab (for example, 120) is hardened to increase in mechanical strength. In particular, when the electrode tab 120 is composed of lithium or an alloy including lithium (hereinafter, this electrode tab is also referred to as a "lithium electrode tab"), strength and hardness of the lithium electrode tab 120 may greatly increase through the cooling step S320. Accordingly, the lithium electrode tab 120 may be prevented from being easily crumpled or bent in the manufacturing process of the electrode assembly 10. In addition, in a process of coupling the electrode tabs 120, 220 and the lead tab 400 to each other through the connecting step S330 to be described below, the electrode tabs 120, 220 may be prevented from sticking to a connecting apparatus while the lead tab 400 and the electrode tabs 120, 220 may be strongly coupled.

In the connecting step S330, the electrode tab cooled in the cooling step S320 and the lead tab 400 may be coupled to each other and electrically connected.

In the connecting step S330, various welding manners including ultrasonic welding or a physical fastening manner using a rivet or the like may be applied to the coupling between the electrode tab bundle and the lead tab 400. For example, when the electrode tab 120 is composed of lithium or an alloy including lithium, an ultrasonic welding manner may be applied to the coupling between the electrode tab 120 and the lead tab 400.

The ultrasonic welding may refer to a welding manner for locally applying ultrasonic vibrations to mutually weld base materials. In the ultrasonic welding process, a pressure above or equal to a predetermined level is applied to an object to be welded, that is, the electrode tabs 120, 220 and the lead tab 400, and when the electrode tab 120 is composed of lithium or an alloy including lithium, an issue is present in that applying ultrasonic vibrations by sufficient pressure is difficult due to a soft property of lithium, and a sticking issue of lithium to a welding apparatus frequently occurs while applying the vibrations.

However, since the lithium electrode tab 120 cooled through the cooling step S320 according to example embodiments is cooled and hardened and increases in mechanical strength, ultrasonic welding may be smoothly performed. In particular, as the lithium electrode tab 120 is cooled and hardened, lithium sticking may be prevented, and ultrasonic output may be further increased, which may greatly increase coupling strength between the electrode tab and the lead tab 400.

As illustrated in FIG. 3, the preparing step S310, the cooling step S320, and the connecting step S330 may be performed sequentially. In this case, a time interval at which the electrode assembly 10 proceeds from the cooling step S320 to the connecting step S330 may be short enough to maintain a cooled state of the electrode tab. In other words, the electrode tab cooled to the target cooling temperature in the cooling step S320 may be put into the connecting step S330 while maintaining the cooled state.

After the lead tab 400 and the electrode assembly 10 are connected to each other through the connecting step S330, the electrode assembly 10 is accommodated in the case 500 through a casing step (not shown). In the casing step (not shown), a process of sealing an edge of the case 500 in which the electrode assembly 10 is accommodated may be additionally performed.

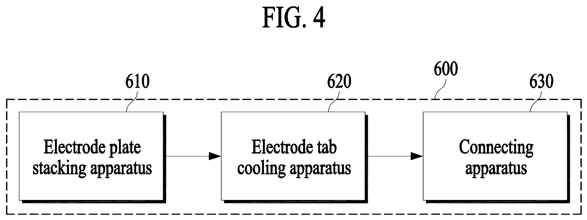

Hereinafter, with reference to FIGS. 4 to 7, the electrode assembly manufacturing system 600 that may perform the manufacturing method of the electrode assembly 10 described above is described.

FIG. 4 illustrates an example configuration of the electrode assembly manufacturing system 600 according to example embodiments.

FIG. 5 illustrates an example configuration of the cooling apparatus 620.

FIG. 6 is an example reference diagram illustrating at least a portion of the electrode tab 120 being cooled by the cooling apparatus 620.

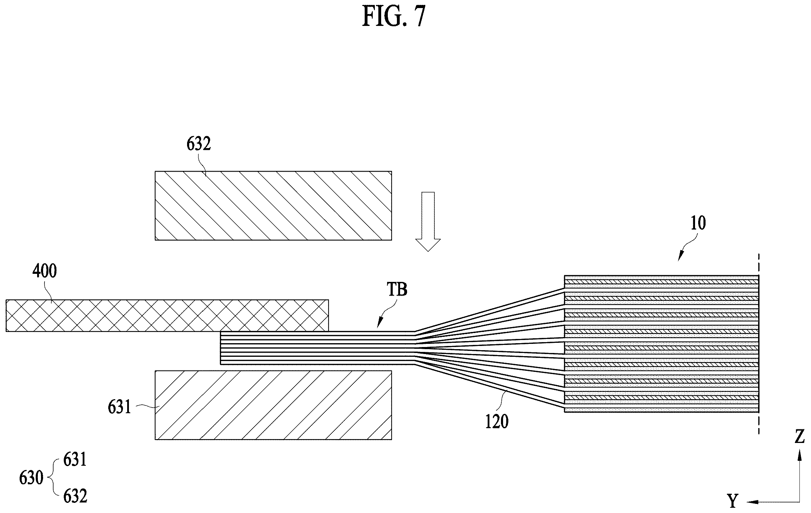

FIG. 7 illustrates an example configuration of a connecting apparatus 630.

The electrode assembly manufacturing system 600 to be described in FIGS. 4 to 7 is a system for manufacturing the electrode assembly 10 described through FIGS. 1 and 2 and may perform the electrode assembly manufacturing method S300 described through FIG. 3, and thus, a description overlapping with FIGS. 1 to 3 may be omitted.

The electrode assembly manufacturing system 600 may include a stacking apparatus 610 for stacking and aligning the plurality of electrode plates 100, 200, the cooling apparatus 620 for cooling at least one of the electrode tabs 120, 220 of the electrode plates 100, 200, and the connecting apparatus 630 for connecting the lead tab 400 to the cooled electrode tab.

The stacking apparatus 610 may alternately stack one or more first electrode plates 100 and one or more second electrode plates 200 with the separator 300 in between.

As the electrode plates 100, 200 are stacked and aligned by the stacking apparatus 610, the first electrode tab 120 of the first electrode plate 100 may be aligned at a preset position and form a first electrode tab bundle, and the second electrode tab 220 of the second electrode plate 200 may be aligned at a position spaced apart from the first electrode tab 120 and form a second electrode tab bundle. In other words, the stacking apparatus 610 may perform the preparing step S310 described above through FIG. 3.

Various types of apparatuses may be applied to the stacking apparatus 610 according to example embodiments, depending on a structure of the electrode assembly 10, and any apparatus that may alternately place the first electrode plate 100 and the second electrode plate 200 having opposite polarity to each other with the separator 300 in between may be applied without limitation.

The cooling apparatus 620 may perform the cooling step S320 described above through FIG. 3.

The cooling apparatus 620 may be configured to locally cool an electrode tab (for example, 120) of the electrode assembly 10, and for example, the cooling apparatus 620 may have various cooling manners such as a cooling manner by contact between a member for cooling and the electrode tab 120 or a manner of immersing and cooling the electrode tab 120 in a coolant.

FIGS. 5 and 6 illustrate an example embodiment of the cooling apparatus 620 composed of a plurality of press parts 621, 622 that may press and cool the electrode tab 120.

Referring to FIGS. 5 and 6, the cooling apparatus 620 may include a first press part 621 and a second press part 622 which perform a relative movement in a direction closer to each other and press an electrode tab.

In the cooling step S320, the first press part 621 and the second press part 622 may be configured to press the electrode tab. For example, in a state where the electrode tab 120 or an electrode tab bundle TB is positioned on an upper surface of the first press part 621, the second press part 622 may descend and press the electrode tab 120 or the electrode tab bundle TB.

Within the first press part 621 and the second press part 622, cooling flow paths 621a, 622a through which a coolant may flow may be formed. While the coolant circulates through the cooling flow paths 621a, 622a, the first press part 621 or the second press part 622 is cooled, and as the first press part 621 or the second press part 622 in a cooled state is in contact with the electrode tab 120, the electrode tab is cooled.

The coolant applied to the cooling apparatus 620 may be, for example, liquid nitrogen. However, a type of the coolant is not limited thereto, and any one that may cool the electrode tab 120 to the target cooling temperature may be applied.

In order to increase a contact time or a contact area of the first press part 621 and the second press part 622 with the coolant, the cooling flow paths 621a, 622a may be provided in a shape bent a plurality of times. However, a specific structure of the cooling flow paths 621a, 622a is not limited to the drawings. In addition, the cooling flow paths 621a, 622a may be disposed only in one of the first press part 621 and the second press part 622.

In some cases, one of the first press part 621 and the second press part 622 may be omitted. For example, in a state where the electrode tab 120 or the electrode tab bundle TB is positioned on a separate worktable, one press part may descend and press and cool the electrode tab 120 or the electrode tab bundle TB.

At least one of the first press part 621 and the second press part 622 may be provided in an enough size to locally press and cool only one of a pair of electrode tab bundles provided in the electrode assembly 10.

The electrode tab bundle TB stacked and aligned in one direction in the preparing step S310 may maintain a state densely packed as being pressed and cooled by the cooling apparatus 620. In other words, as the cooling apparatus 620 presses and cools the electrode tabs 120 aligned in one direction with some gap therebetween in the preparing step S310, the electrode tab bundle TB in which the electrode tabs are cooled and hardened in a densely stacked state may be formed. Accordingly, in the connecting step S330 after the cooling step S320, the lead tab 400 and the electrode tab bundle TB may be easily aligned. Therefore, the cooling apparatus 620 may also perform the role of a pre-welding apparatus for easily welding the lead tab 400 and the electrode tabs 120, 220.

Meanwhile, the cooling apparatus 620 may further include a temperature sensor (not shown) that may measure a temperature of the electrode tab bundle TB. The temperature sensor (not shown) may be configured to sense the temperature of the electrode tab bundle TB in real time. The cooling apparatus 620 may cool the electrode tab bundle TB through feedback control using a temperature value sensed in the temperature sensor (not shown). For example, the first press part 621 and the second press part 622 of the cooling apparatus 620 may be configured to press the electrode tab bundle TB until the temperature of the electrode tab bundle TB reaches a preset target cooling temperature and release the pressing when the target cooling temperature is reached.

The electrode tab 120 or the electrode tab bundle TB cooled by the cooling apparatus 620 may be subsequently put into the connecting apparatus 630 and electrically connected to the lead tab 400.

FIG. 7 illustrates an example embodiment of the connecting apparatus 630 that may ultrasonically weld an electrode tab bundle and the lead tab 400.

Referring to FIG. 7, the connecting apparatus 630 may include a first welding member 631 on which the lead tab 400 and a cooled electrode tab are seated and a second welding member 632 for ultrasonically welding the lead tab 400 and the electrode tab positioned on the first welding member 631. For example, the first welding member 631 may be an anvil, and the second welding member 632 may be a horn.

The connecting apparatus 630 may perform the connecting step S330 of the connecting described above through FIG. 3. The connecting step S330 by the connecting apparatus 630 may be composed of two major steps below.

First, a first connecting step of aligning a cooled electrode tab bundle and the lead tab 400 on a connection member is performed. In the first connecting operation, the electrode tab 120 or the electrode tab bundle TB cooled by the cooling apparatus 620 and the lead tab 400 may be aligned in an overlapping state on the first welding member 631. In this case, a temperature of the electrode tab 120 aligned on the first welding member 631 may be a cooled temperature of the cooling apparatus 620, for example, less than or equal to 0°C.

Subsequently, in a second connecting step, ultrasonic welding may be formed while the first welding member 631 and the second welding member 632 press the electrode tab 120 and the lead tab 400. For example, in the second connecting operation, the second welding member 632 descends and applies pressure by ultrasonic vibrations to the electrode tab 120 and the lead tab 400, and accordingly, the electrode tab 120 and the lead tab 400 are bonded to each other and electrically connected.

As described above, since the lithium electrode tab 120 cooled through the cooling step S320 is cooled and hardened and increases in mechanical strength, ultrasonic welding may be smoothly performed by the connecting apparatus 630. In particular, as the lithium electrode tab 120 is cooled and hardened, lithium sticking may be prevented, and ultrasonic output may be further increased, which may greatly increase coupling strength between the electrode tab and the lead tab 400.

In addition to the above description, a technical idea regarding an ultrasonic welding apparatus used for fabricating the lithium ion battery cell 1 may be applied to a specific configuration of the connecting apparatus 630 including the first welding member 631 and the second welding member 632 without limitation.

Meanwhile, although not illustrated in the drawings, the electrode assembly manufacturing system 600 may further include at least one of a first transfer apparatus (not shown) for transferring the electrode assembly 10 assembled by the stacking apparatus 610 to the cooling apparatus 620 and a second transfer apparatus (not shown) for transferring the electrode assembly 10 cooled by the cooling apparatus 620 to the connecting apparatus 630.

However, in example embodiments, at least two of the stacking apparatus 610, the cooling apparatus 620, and the connecting apparatus 630 may be configured as integrated, and in this case, the cooling step S320 or the connecting step S330 may also be performed as the cooling apparatus 620 or the connecting apparatus 630 approaches the electrode assembly 10 positioned on a worktable without a separate transfer apparatus.

According to example embodiments, by cooling and hardening the electrode tab 120 composed of lithium or an alloy including lithium, a process of connecting to the lead tab 400 may be performed in a state where the mechanical stiffness of the electrode tab 120 is increased.

Since the electrode tab 120 cooled has superior stiffness to the electrode tab 120 not cooled, the output of a connecting apparatus, for example, an ultrasonic welding apparatus, may further increase, and thus, coupling strength between the electrode tab 120 and the lead tab 400 may be increased.

In addition, since the electrode tab 120 cooled has superior stiffness to the electrode tab 120 not cooled, ease of handling and stability may be increased in the manufacturing process of the electrode assembly 10. In particular, since the spreading of lithium metal may be suppressed in a process of coupling the electrode tab 120 and the lead tab 400, interference with other components and degradation of sealing performance of the case 500 due to the spreading of a lithium electrode tab in an ultrasonic welding process may be prevented.

In addition, since the electrode tab 120 cooled and hardened through a cooling process does not easily stick to a manufacturing apparatus, for example, the connecting apparatus 630, process inefficiency due to lithium metal sticking may be resolved.

While various example embodiments of the present disclosure are described in detail above, the scope of the present disclosure is not limited thereto, and it will be apparent to those of ordinary skill in the art that modifications and variations may be made without departing from the scope of the present disclosure as defined by the appended claims. In addition, the aforementioned example embodiments may be implemented with some elements removed, and each example embodiment may be implemented in combination with each other.

### [Description of symbols]

1... Battery cell; 10... Electrode assembly;
100... First electrode plate; 120... First electrode tab;
200... Second electrode plate; 220... Second electrode tab;
300... Separator; 400... Lead tab;
500... Case; 600... Electrode assembly system;
610... Stacking apparatus; 620... Cooling apparatus;
621... First press part; 622... Second press part;
621a, 622a... Cooling flow path; 630... Connecting apparatus;
631... First welding member; 632... Second welding member;

## Claims

1. An electrode assembly manufacturing method comprising:
a preparing step, in which an electrode tab of one or more first electrode plates is aligned;
a cooling step, in which the electrode tab is cooled; and
a connecting step, in which the cooled electrode tab and a lead tab are coupled to each other.

2. The electrode assembly manufacturing method of claim 1,
wherein the electrode tab of the one or more first electrode plates is made of lithium or an alloy including lithium.

3. The electrode assembly manufacturing method of claim 1,
wherein, in the cooling step, the electrode tab is cooled while being pressed by a cooling apparatus.

4. The electrode assembly manufacturing method of claim 3,
wherein the cooling apparatus includes a first press part and a second press part configured to perform a relative movement in a direction closer to each other and press the electrode tab, and
wherein at least one of the first press part and the second press part includes a cooling flow path through which a coolant flows.

5. The electrode assembly manufacturing method of claim 4,
wherein the coolant flowing through the cooling flow path is liquid nitrogen.

6. The electrode assembly manufacturing method of claim 1,
wherein, in the preparing step, the one or more first electrode plates are stacked alternately with one or more second electrode plates with a separator interposed therebetween, and the one or more second electrode plates have a polarity opposite to a polarity of the one or more first electrode plates.

7. The electrode assembly manufacturing method of claim 6,
wherein, in the preparing step, an electrode tab bundle in which the electrode tab of the one or more first electrode plates is stacked is formed, and
wherein, in the cooling step, the electrode tab bundle is cooled.

8. The electrode assembly manufacturing method of claim 6,
wherein the one or more first electrode plates are a negative electrode plate made of lithium or an alloy including lithium.

9. The electrode assembly manufacturing method of claim 1,
wherein the connecting includes:
a first connecting step, in which the cooled electrode tab and the lead tab are aligned on a connecting apparatus; and
a second connecting step, in which the electrode tab and the lead tab are coupled by the connecting apparatus.

10. The electrode assembly manufacturing method of claim 9,
wherein, in the first connecting step, a temperature of the electrode tab is less than or equal to 0 degrees Celsius (°C).

11. The electrode assembly manufacturing method of claim 9,
wherein, in the second connecting step, the electrode tab and the lead tab are coupled by ultrasonic welding.

12. A battery cell comprising:
an electrode assembly manufactured by the electrode assembly manufacturing method according to claim 1; and
a case surrounding the electrode assembly.

13. An electrode assembly manufacturing system comprising:
a stacking apparatus configured to align one or more first electrode plates and one or more second electrode plates having opposite polarity to each other;
a cooling apparatus configured to cool an electrode tab of the one or more first electrode plates; and
a connecting apparatus configured to connect the cooled electrode tab and a lead tab.

14. The electrode assembly manufacturing system of claim 13,
wherein the cooling apparatus includes a first press part and a second press part configured to perform a relative movement in a direction closer to each other and press the electrode tab, and
wherein at least one of the first press part and the second press part includes a cooling flow path through which a coolant flows.

15. The electrode assembly manufacturing system of claim 13,
wherein the connecting apparatus is configured to ultrasonically weld the cooled electrode tab and the lead tab.
